# EUROPÄISCHE PATENTSCHRIFT

(11) **EP 1 991 838 B1**
(45) Veröffentlichungstag und Bekanntmachung des Hinweises auf die Patenterteilung: **17.09.2014**
(21) Anmeldenummer: 07722925.0
(22) Anmeldetag: 24.02.2007
(51) Int. Cl.: G01F 1/684, G01F 15/14, G01F 15/18

(54) **ANORDNUNG EINES LUFTMASSENMESSERS AN EINEM STRÖMUNGSKANAL**
ARRANGEMENT OF AN AIR MASS METER AT A FLOW CHANNEL
ARRANGEMENT DE MESURE DE LA MASSE D'AIR SUR UN CONDUIT D'ÉCOULEMENT

(30) Priorität: 03.03.2006 DE 102006010374
(43) Veröffentlichungstag der Anmeldung: 19.11.2008
(73) Patentinhaber: MANN+HUMMEL GmbH, 71638 Ludwigsburg (DE); Hitachi, Ltd., Chiyoda-ku Tokyo (JP)
(72) Erfinder: LANG, Jürgen, 71726 Benningen (DE); THEBAULT, Eric, 71640 Ludwigsburg (DE); HASENFRATZ, Robert, 71334 Waiblingen (DE); KOZAWA, Masayuki, Ibaraki-Ken (JP); KIKAWA, Hiromu, Ibaraki-Ken (JP)
(74) Vertreter: Riedel, Peter
(86) Internationale Anmeldenummer: PCT/EP2007/001613
(87) Internationale Veröffentlichungsnummer: WO 2007/101570

(56) Entgegenhaltungen:
- EP-A1- 1 391 699
- WO-A-03/089884
- DE-A1- 4 410 049
- US-A- 4 523 461

## Beschreibung

Die Erfindung betrifft eine Anordnung eines Luftmassenmessers an einem Strömungskanal der im Oberbegriff des Anspruchs 1 angegebenen Gattung.

Luftmassenmesser werden im Zusammenhang mit der Motorsteuerung von Fahrzeugmotoren eingesetzt. Ein Luftmassenmesser dient dabei als Sensor zur Erfassung der vom Motor angesaugten Luftmasse. Das Messergebnis des Sensors kann jedoch von mehreren Faktoren beeinflusst sein, insbesondere auch von der Lage bezogen auf die Richtung des Massestroms. Bei den derzeit gebräuchlichen Anordnungen umfasst der Luftmassenmesser einen Sockel mit einer Anlagefläche, die bei montiertem Luftmassenmesser auf einem Flansch an einem Gehäuseabschnitt des Strömungskanals liegt. Die Befestigung erfolgt üblicherweise dadurch, dass durch am Sockel vorgesehene Bohrungen Schrauben gesteckt werden, die in Bohrungen seitlich des Flansches geschraubt werden. Auf Grund der bei solchen Befestigungsmitteln üblicherweise auftretenden Toleranzen ist ein bestimmter Bereich vorhanden, innerhalb von welchem die Position des Luftmassenmessers von der gewünschten Einbaulage abweicht, was einen spürbaren Einfluss auf das Messergebnis und somit das gelieferte Sensorsignal hat.

In der DE 44 10 049 A1 ist die Anordnung eines Luftmassenmessers an einem Strömungskanal beschrieben. Dabei ist an einem Gehäuseabschnitt des Strömungskanals eine Aufnahmeöffnung für den Luftmassenmesser vorgesehen. Diese Aufnahmeöffnung wird vom einem Flansch umgeben. Der Luftmassenmesser weist einen Sockel mit einer dem Flansch zugewandten Anlagefläche auf. An dem Gehäuseabschnitt sind Befestigungsmittel zur Befestigung des Sockels vorgesehen. An dem Sockel und dem Gehäuseabschnitt sind Mittel zur spielfreien Positionierung des Luftmassenmessers bezogen auf die Strömungsrichtung des im Strömungskanal geführten Fluidstroms vorgesehen. Diese Mittel sind Führungsstifte, die in Öffnungen im Luftmassenstrom-Sensor aufgenommen sind. In diesen Führungsstiften sind Öffnungen zur Aufnahme von Nieten vorgesehen.

Die EP 1 391 699 A1 offenbart eine Anordnung eines Luftmassenmessers an einem Strömungskanal, wobei an einem Gehäuseabschnitt des Strömungskanals eine Aufnahmeöffnung für den Luftmassenmesser vorgesehen ist. Diese Aufnahmeöffnung wird von einem Flansch umgeben. Der Luftmassenmesser weist einen Sockel mit einer dem Flansch zugewandten Anlagefläche auf. Es sind Befestigungsmittel zur Befestigung des Sockels an dem Gehäuseabschnitt vorgesehen. Zusätzlich zu den Befestigungsmitteln sind an dem Flansch Vorsprünge vorgesehen, die in Öffnungen des Sockels greifen.

Der Erfindung liegt daher die Aufgabe zugrunde, eine Anordnung eines Luftmassenmessers an einem Strömungskanal zu schaffen, durch die die Position des Luftmassenmessers präzise festgelegt und damit die Qualität des Sensorssignals erheblich verbessert wird.

Diese Aufgabe wird durch eine Anordnung eines Luftmassenmessers mit den Merkmalen des Anspruchs 1 gelöst.

Durch die erfindungsgemäße Anordnung wird der Luftmassenmesser beim Einsetzen in die Aufnahmeöffnung genau positioniert, was zu einer erheblichen Qualitätsverbesserung des erzeugten Signals des Luftmassenmessers führt. Mit diesem präziseren Signal wird auch die Motorsteuerung verbessert, was schließlich zu besseren Abgaswerten der Brennkraftmaschine führt. Im Zusammenhang mit der vorliegenden Erfindung bedeutet "spielfrei", dass der Luftmassenmesser bei der Montage eine genau definierte Position einnimmt und auch beibehält. Gemäß der Erfindung sind als Mittel zur spielfreien Positionierung zwei Zentrierstifte vorgesehen, die in passgenaue Zentrieröffnungen greifen. Zentrierstifte und Zentrieröffnungen sind ohne großen Aufwand mit hoher Maßgenauigkeit herstellbar und haben darüber hinaus den Vorteil, dass diese bei der Montage des Luftmassenmessers an dem Gehäuseabschnitt des Strömungskanals selbständig ineinandergreifen. Damit der Sockel des Luftmassenmessers auf jeden Fall zuverlässig an dem Flansch anliegt, ist es zweckmäßig, dass die Höhe, um die die Zentrierstifte über die Ebene des Flansches hervorsteht, geringer ist als die Tiefe der Zentrieröffnungen. Neben der exakten Positionierung des Luftmassenmessers, bezogen auf die Strömungsrichtung, sind zusätzlich noch Mittel zur genauen Festlegung der Einstecktiefe des Luftmassenmessers in den Strömungskanal vorgesehen.

Zur Minimierung der Bauteile und Reduzierung der Herstellkosten ist es zweckmäßig, dass die Zentrierstifte am äußeren Rand des Flansches der Aufnahmeöffnung einstückig angeformt sind.

Gemäß einer weiteren Ausgestaltung der Erfindung sind die Zentrieröffnungen an der Anlagefläche des Sockels ausgebildet, wobei insbesondere die Zentrieröffnungen als vom äußeren Rand der Anlagefläche ausgehende Nuten ausgebildet sind. Auf diese Weise wird lediglich eine Passgenauigkeit der Zentrieröffnungen in der Richtung erzeugt, in der die definierte Lage des Luftmassenmessers erforderlich ist, und in Querrichtung ein ausreichendes Spiel vorhanden ist, um ein Verklemmen der ineinandergreifenden Teile zu vermeiden.

Zur Erleichterung der Montage ist es vorteilhaft, dass die Zentrierstifte an ihrem vorderen Ende einen Einführkonus aufweisen.

Als besonders zweckmäßig wird eine Anordnung angesehen, bei der zwei Zentrierstifte und zwei Zentrieröffnungen vorgesehen sind. Wenn die Aufnahmeöffnung bzw. der Flansch eine längliche Erstreckung aufweisen, ist eine Anordnung möglich, bei der die Zentrierstifte sich mindestens annähernd in der Mitte der Längserstreckung befinden. Für eine besonders genaue Positionierung des Luftmassenmessers ist es von Vorteil, dass die Aufnahmeöffnung bzw. der Flansch eine längliche Erstreckung besitzen und die Zentrierstifte in einem deutlichen - vorzugsweise möglichst großen - Abstand zu einer Querachse angeordnet sind.

Ein Ausführungsbeispiel der erfindungsgemäßen Anordnung eines Luftmassenmessers an einem Strömungskanal ist nachstehend anhand der Zeichnung näher erläutert. In der Zeichnung zeit:
- Fig. 1: eine Ansicht des Luftmassenmessers mit Sensorgehäuse und Sockel,
- Fig. 2: eine Ansicht in Richtung des Pfeils II in Fig. 1,
- Fig. 3: eine Draufsicht auf einen, die Aufnahmeöffnung umgebenden Flansch an einem Gehäuseabschnitt des Strömungskanals,
- Fig. 4: einen Schnitt entlang der Linie IV-IV in Fig. 3,
- Fig. 5: eine Ansicht des Flansches gemäß Fig. 4 mit montiertem Luftmassenmesser,
- Fig. 6: einen Schnitt entlang der Linie VI-VI in Fig. 5,
- Fig. 7: eine Ausführungsvariante zu Fig. 2,
- Fig. 8: eine Ausführungsvariante zu Fig. 3,
- Fig. 9: eine Ausführungsvariante zu Fig. 6.

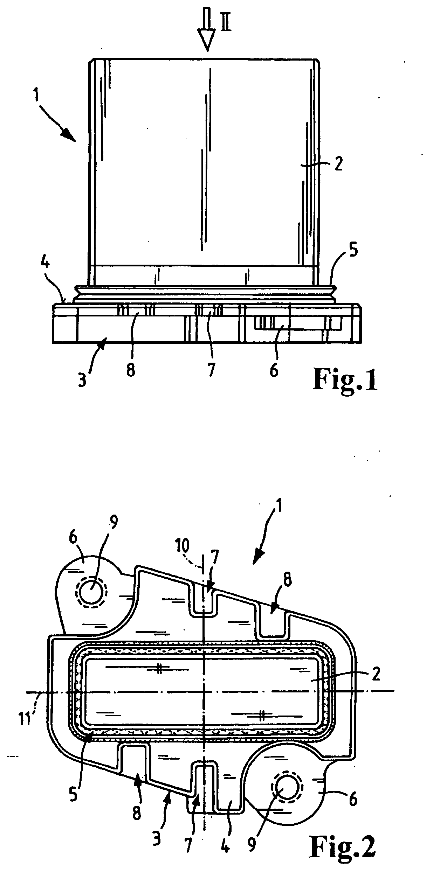

In Fig. 1 ist ein Luftmassenmesser 1 dargestellt, der ein Sensorgehäuse 2 und einen Sockel 3 umfasst. An dem Sockel 3 ist auf seiner dem Sensorgehäuse 2 benachbarten Seite eine Anlagefläche 4 ausgebildet, an der sich ein umlaufender Bund 5 befindet, der das Sensorgehäuse 2 umgibt.

Die Fig. 2 zeigt eine Ansicht in Richtung des Pfeils II in Fig. 1, so dass der Luftmassenmesser 1 mit Blick auf die Anlagefläche 4 am Sockel 3 zu sehen ist. Mit dem Bezugszeichen 2 ist, ebenso wie in Fig. 1, das Sensorgehäuse bezeichnet. Wie aus den Fig. 1 und 2 hervorgeht, befinden sich an dem Sockel 3 Laschen 6 mit Bohrungen 9, die zur Aufnahme von - in der Zeichnung nicht dargestellten Befestigungsschrauben vorgesehen sind. An dem Sockel 3 sind auf der Seite der Anlagefläche 4 Zentrieröffnungen 7 angeordnet, die gemäß Darstellung in Fig. 2 als vom Rand des Sockels 3 ausgehende Nuten ausgebildet sind. Dabei liegen sich die Zentrieröffnungen 7 in einer Querachse 10 des Luftmassenmessers 1 gegenüber. Die Querachse 10 erstreckt sich orthogonal zu einer Längsachse 11 des Luftmassenmessers 1, wobei die Längsachse 11 möglichst genau zur Strömungsrichtung des Fluids auszurichten ist. An dem Sockel 3 sind an dessen Anlagefläche 4 außerdem zwei Ausnehmungen 8 vorgesehen, die ebenfalls als vom Rand des Sockels 3 in Richtung auf den umlaufenden Bund 5 verlaufende offene Nuten ausgebildet sind. Die Funktion der Zentrieröffnungen 7 und Ausnehmungen 8 wird später noch näher erläutert.

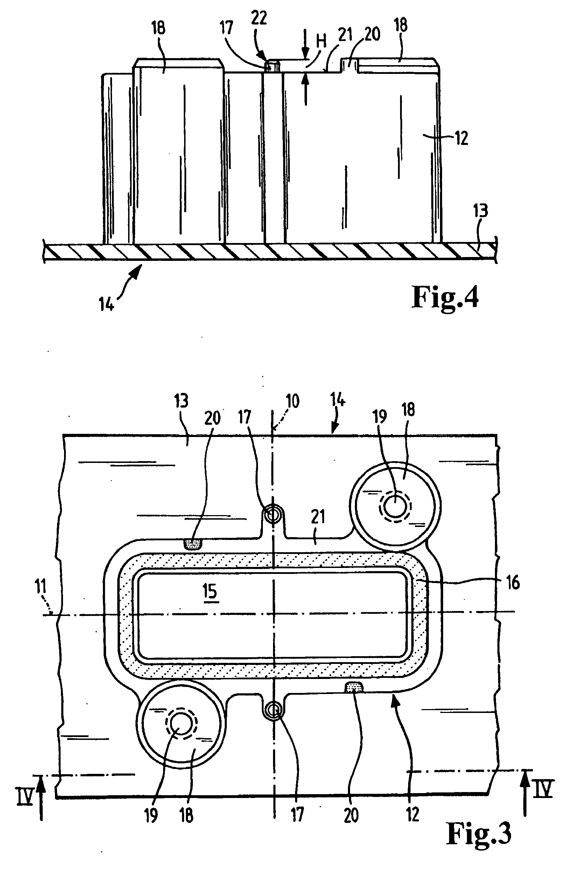

Die Fig. 3 zeigt eine Draufsicht auf einen Flansch 12, der an einem Gehäuseabschnitt 13 eines Strömungskanals 14 ausgebildet ist und eine Aufnahmeöffnung 15 für den Luftmassenmesser gemäß Fig. 1 und 2 umgibt. Am Flansch 12 ist eine umlaufende Vertiefung 16 vorgesehen, die zur Aufnahme des umlaufenden Bundes 5 am Sockel 3 des Luftmassenmessers 1 (vgl. Fig. 1 und 2) dient. Wie aus den Fig. 2 und 3 ersichtlich ist, haben sowohl die Aufnahmeöffnung 15 als auch der darin einzusteckende Luftmassenmesser bzw. dessen Gehäuse 2 eine längliche Erstreckung, so dass auch die Aufnahmeöffnung 15 eine Längsachse 11 und eine Querachse 10 besitzt.

In der Mitte der Längserstreckung der Aufnahmeöffnung 15 und demnach auf der Querachse 10 liegend, befinden sich am Rand des Flansches 12 zwei Zentrierstifte 17, die einstückig am äußeren Rand des Flansches 12 angeformt sind. Aus Fig. 3 ist außerdem ersichtlich, dass an den Flansch 12 angrenzend zwei zylinderförmige Sockelelemente 18 angeformt sind, in denen jeweils eine Gewindebohrung 19 vorgesehen ist. Die Gewindebohrungen 19 dienen zur Aufnahme von Befestigungsschrauben, die durch die Bohrungen 9 in den Laschen 6 (vgl. Fig. 2) gesteckt und dann in die Gewindebohrung 19 geschraubt werden. Seitlich neben den Zentrierstiften 17 befindet sich an dem Flansch 12 in entsprechendem Abstand jeweils ein Zapfen 20.

An Stelle der Befestigung mittels Schrauben mit metrischem Gewinde können auch selbstformende Schrauben benutzt werden, wobei das Gewinde in den Bohrungen entfallen kann.

Die Fig. 4 zeigt einen Schnitt entlang der Linie IV-IV in Fig. 3. Daraus wird ersichtlich, dass der Flansch 12 eine Ebene 21 besitzt und sich über die Ebene 21 hinaus sowohl die Sockelelemente 18 als auch die Zentrierstifte 17 und die Zapfen 20 erheben. Die Höhe, um die der Zentrierstift 17 über die Ebene 21 des Flansches 12 hervorsteht, ist mit H bezeichnet. Es ist aus Fig. 4 auch erkennbar, dass der Zentrierstift 17 an seinem vorderen Ende einen Einführkonus 22 aufweist.

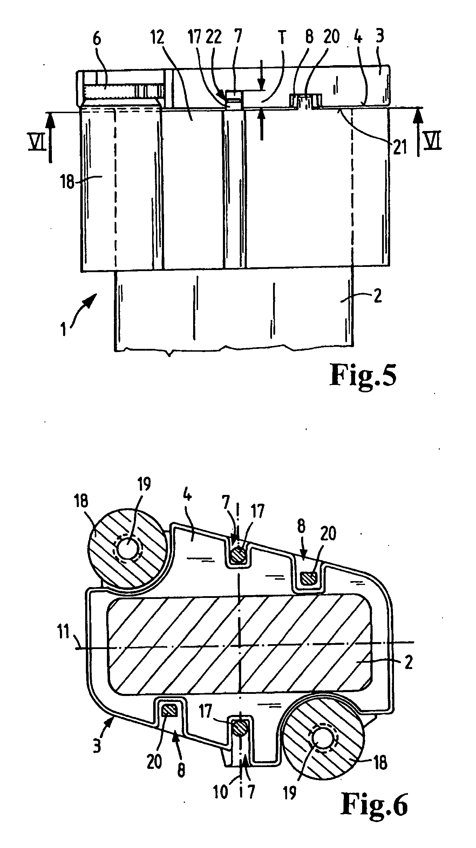

Die Fig. 5 zeigt einen in die Aufnahmeöffnung am Flansch 12 gesteckten Luftmassenmesser, dessen Sockel 3 auf dem Flansch 12 aufliegt. Die Fig. 6 zeigt einen Schnitt entlang der Linie VI-VI in Fig. 5. Aus Fig. 5 ist ersichtlich, dass sich die Lasche 6 unmittelbar über dem Sockelelement 18 befindet. Der Zentrierstift 17 greift in die Zentrieröffnung 7 ein, wobei aus Fig. 5 deutlich wird, dass die Tiefe T der Zentrieröffnung 7 deutlich größer ist als die in Fig. 4 angegebene Höhe H, um die der Zentrierstift 17 über die Ebene 21 des Flansches 12 hervorsteht. Zur Festlegung der Einstecktiefe des Luftmassenmessers 1 in den Strömungskanal dient der Zapfen 20, der zur Anlage an dem Grund der Ausnehmung 8 kommt und damit die Einstecktiefe begrenzt.

Wie aus Fig. 6 deutlich wird, besitzen die Zapfen 20 zu der Umfangskontur der Ausnehmungen 8 ein erhebliches Spiel, so dass ein Verklemmen der Zapfen 20 in den Ausnehmungen 8 vermieden ist. Dagegen ist die Bemessung der Zentrierstifte 17, nämlich bezüglich ihres Durchmessers, zu der Breite der Zentrieröffnung 7 und bezüglich der inneren Enden passgenau, so dass in Richtung der Längsachse 11 und der Querachse 10 (vgl. Fig. 2 und 3) die Zentrierstifte 17 spielfrei in den Zentrieröffnungen 7 gehalten werden. Durch diese Anordnung der Zentrierstifte 17 und Zentrieröffnungen 7 ergibt sich eine äußerst exakte Ausrichtung des Luftmassenmessers bzw. des Sensorgehäuses 2 bezogen auf die Strömungsrichtung des in dem Strömungskanal geführten Fluidstroms.

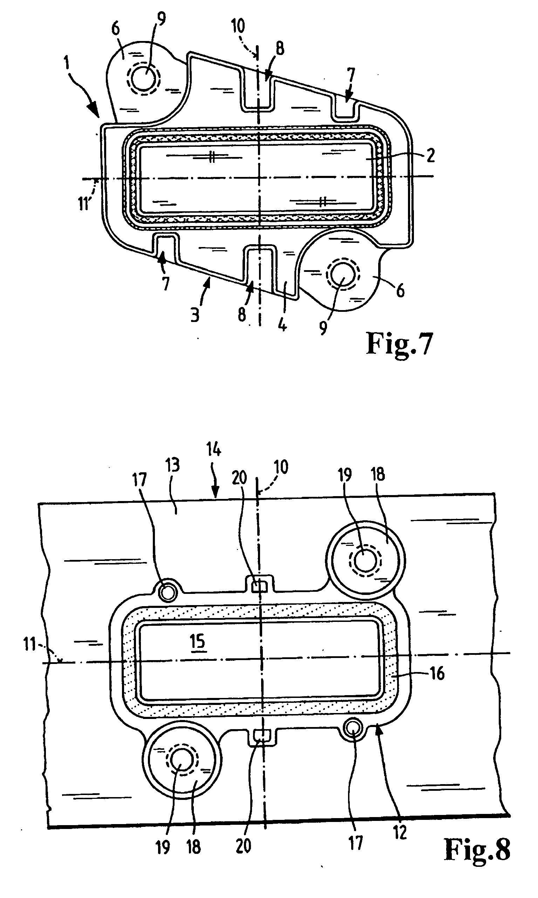

Die Fig. 7 zeigt eine Ausführungsvariante zu Fig. 2, wobei der Unterschied darin besteht, dass die Zentrieröffnungen 7 in einem deutlichen Abstand zur Querachse 10 angeordnet sind und die Ausnehmungen 8 im Bereich der Querachse 10 liegen. Für alle übrigen Teile stimmen die Anordnungen und Bezugszeichen mit denjenigen der Fig. 2 überein.

In Fig. 8 ist entsprechend die Anordnung der Zentrierstifte 17 so gewählt, dass deren Position den Zentrieröffnungen 7 in Fig. 7 angepasst ist, d.h. der Abstand der Zentrierstifte 17 von der Querachse 10 entspricht demjenigen der Zentrieröffnungen 7. Die Zapfen 20 sind im Bereich der Querachse 10 vorgesehen und passen somit in die Ausnehmungen 8. Im übrigen entsprechen die Bezugszeichen und Darstellungen denjenigen in Fig. 3.

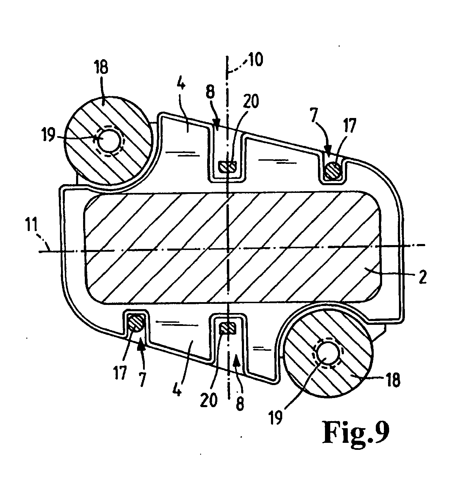

Die Fig. 9 zeigt einen Schnitt durch die Anordnung wie in Fig. 6, jedoch mit der Läge der Zentrieröffnungen 7 und Zentrierstifte 17 wie in Fig. 7 und 8. Durch die relativ großen Abstände der Zentrieröffnungen 7 und Zentrierstifte 17 von der Querachse 10 wird eine noch größere Positionsgenauigkeit des Luftmassenmessers 2 erreicht.

## Patentansprüche

1. Anordnung umfassend einen Luftmassenmesser (1) und einen Strömungskanal (14) mit einem Gehäuseabschnitt (13), wobei an dem Gehäuseabschnitt (13) des Strömungskanals (14) eine Aufnahmeöffnung (15) für den Luftmassenmesser (1) vorgesehen und diese von einem Flansch (12) umgeben ist, wobei der Luftmassenmesser (1) einen Sockel (3) mit einer dem Flansch (12) zugewandten Anlagefläche (4) aufweist und wobei Befestigungsmittel zur Befestigung des Sockels (3) an dem Gehäuseabschnitt (13) vorgesehen sind, **dadurch gekennzeichnet,**
- **dass** an dem Sockel (3) und dem Gehäuseabschnitt (13) Mittel zur spielfreien Positionierung des Luftmassenmessers (1) bezogen auf die Strömungsrichtung des im Strömungskanal (14) geführten Fluidstroms vorgesehen sind,
- **dass** als Mittel zur spielfreien Positionierung mindestens zwei Zentrierstifte (17) vorgesehen sind, die in passgenaue Zentrieröffnungen (7) greifen,
- wobei die Zentrieröffnungen (7) an der Anlagefläche (4) des Sockels ausgebildet sind, um eine Passgenauigkeit der Zentrieröffnungen (7) in Strömungsrichtung des im Strömungskanal geführten Fluidstroms zu erzeugen, wobei in Querrichtung ein ausreichendes Spiel vorhanden ist, um ein Verklemmen zu vermeiden,
- wobei die Höhe (H), um die die Zentrierstifte (17) über die Ebene des Flansches (12) hervorstehen, geringer ist als die Tiefe (T) der Zentrieröffnungen (7), damit der Sockel (3) des Luftmassenmessers (1) zuverlässig an dem Flansch (12) anliegt,
- **dass** zusätzliche Mittel (8, 20) zur genauen Festlegung der Einstecktiefe des Luftmassenmessers (1) in den Strömungskanal (14) vorgesehen sind, die Zapfen (20) und Ausnehmungen (8) umfassen,
- wobei die Ausnehmungen (8) an der Anlagefläche (4) des Sockels (3) ausgebildet sind, die eine Umfangskontur und einen Grund aufweisen,
- wobei die Zapfen (20) zu der Umfangskontur ein erhebliches Spiel haben, so dass ein Verklemmen der Zapfen (20) vermieden wird,
- wobei zur Festlegung der Einstecktiefe des Luftmassenmessers (1) in den Strömungskanal der Zapfen (20) zur Anlage an den Grund kommt und damit die Einstecktiefe begrenzt.

2. Anordnung nach Anspruch 1,
**dadurch gekennzeichnet, dass** die Zentrierstifte (17) am äußeren Rand des Flansches (12) einstückig angeformt sind.

3. Anordnung nach Anspruch 1.
**dadurch gekennzeichnet, dass** die Zentrieröffnungen (7) als vom äußeren Rand der Anlagefläche (4) ausgehende Nuten ausgebildet sind.

4. Anordnung nach einem der Ansprüche 1 bis 3,
**dadurch gekennzeichnet, dass** die Zentrierstifte (17) an ihrem vorderen Ende einen Einführkonus (22) aufweisen.

5. Anordnung nach Anspruch1 oder 2,
**dadurch gekennzeichnet, dass** die Aufnahmeöffnung (15) bzw. der Flansch (12) eine längliche Erstreckung aufweisen und die Zentrierstifte (17) sich mindestens annähernd in der Mitte der Längserstreckung befinden.

6. Anordnung nach Anspruch 1 oder 2,
**dadurch gekennzeichnet, dass** die Aufnahmeöffnung (15) bzw. der Flansch (12) eine längliche Erstreckung aufweisen und die Zentrierstifte (17) in einem deutlichen Abstand zu einer Querachse (10) angeordnet sind, wobei die Querachse (10) die Mitte der Längserstreckung bildet.

## Claims

1. Arrangement comprising a mass air flow meter (1) and a flow passage (14) with a housing section (13), wherein a reception opening (15) for the mass air flow meter (1) is provided on the housing section (13) of the flow passage (14) and the reception opening (15) is surrounded by a flange (12), wherein the mass air flow meter (1) has a base (3) with a contact surface (4) facing the flange (12) and wherein fastening means are provided for securing the base (3) to the housing section (13), **characterised in that**
- means for positioning the mass air flow meter (1) free of play relative to the direction of flow of the fluid stream carried in the flow passage (14) are provided on the base (3) and the housing section (13),
- **in that**, as means for positioning free of play, at least two centring pins (17) engaging with custom-fit centring apertures (7) are provided,
- wherein the centring apertures (7) are formed on the contact surface (4) of the base to provide an accurate fit of the centring apertures (7) in the direction of flow of the fluid stream carried in the flow passage, with enough play being provided in the transverse direction to avoid jamming,
- wherein the height (H) by which the centring pins (17) project above the plane of the flange (12) is less than the depth of the centring apertures (7), so that the base (3) of the mass air flow meter (1) reliably contacts the flange (12),
- **in that** additional means (8, 20) comprising pins (20) and recesses (8) are provided for the accurate definition of the insertion depth of the mass air flow meter (1) into the flow passage (14),
- wherein the recesses (8), which have a circumferential contour and a base, are formed on the contact surface (4) of the base (3),
- wherein the pins (20) have considerably play relative to the circumferential contour, so that a jamming of the pins (20) is avoided,
- wherein the pin (20) comes into contact with the base for the definition of the insertion depth of the mass air flow meter (1) into the flow passage, thereby limiting the insertion depth.

2. Arrangement according to claim 1,
**characterised in that** the centring pins (17) are integrally formed at the outer edge of the flange (12).

3. Arrangement according to claim 1,
**characterised in that** the centring apertures (7) are designed as grooves starting from the outer edge of the contact surface (4).

4. Arrangement according to any of claims 1 to 3,
**characterised in that** the centring pins (17) have an insertion cone (22) at their front end.

5. Arrangement according to claim 1 or 2,
**characterised in that** the reception opening (15) and the flange (12) respectively have an oblong shape and the centring pins (17) are located at least approximately in the centre of the longitudinal dimension.

6. Arrangement according to claim 1 or 2,
**characterised in that** the reception opening (15) and the flange (12) respectively have an oblong shape and the centring pins (17) are located at a distinct distance from a transverse axis (10), the transverse axis (10) forming the centre of the longitudinal dimension.

## Revendications

1. Dispositif comprenant un appareil de mesure de masse d'air (1) et un conduit d'écoulement (14) avec une partie de boîtier (13), étant précisé qu'il est prévu sur la partie de boîtier (13) du conduit d'écoulement (14) une ouverture de logement (15) pour l'appareil de mesure de masse d'air (1), laquelle ouverture est entourée par un collet (12), que l'appareil de mesure de masse d'air (1) présente un socle (3) avec une surface d'application (4) tournée vers le collet (12), et qu'il est prévu sur ladite partie de boîtier (13) des moyens de fixation pour la fixation du socle (3), **caractérisé**
- **en ce qu'**il est prévu sur le socle (3) et sur la partie de boîtier (13) des moyens pour le positionnement sans jeu de l'appareil de mesure de masse d'air (1) par rapport au sens d'écoulement du courant de fluide qui passe dans le conduit d'écoulement (14),
- **en ce qu'**il est prévu comme moyens pour le positionnement sans jeu au moins deux tiges de centrage (17) qui entrent dans des ouvertures de centrage (7) parfaitement ajustées,
- étant précisé que les ouvertures de centrage (7) sont formées sur la surface d'application (4) du socle afin de produire une précision des ouvertures de centrage (7) dans le sens d'écoulement du courant de fluide qui passe dans le conduit d'écoulement, étant précisé qu'il est prévu dans le sens transversal un jeu suffisant pour éviter un coincement,
- étant précisé que la hauteur (H) sur laquelle les tiges de centrage (17) dépassent du plan du collet (12) est inférieure à la profondeur (T) des ouvertures de centrage (7), pour que le socle (3) de l'appareil de mesure de masse d'air (1) soit appliqué de manière fiable contre le collet (12),
- **en ce qu'**il est prévu des moyens supplémentaires (8, 20) pour fixer avec précision la profondeur d'introduction de l'appareil de mesure de masse d'air (1) dans le conduit d'écoulement (14), qui comprennent des tétons (20) et des creux (8),
- étant précisé que les creux (8) sont formés sur la surface d'application (4) du socle (3) qui est dotée d'un contour périphérique et d'un fond,
- étant précisé que les tétons (20) ont un jeu important par rapport au contour périphérique, ce qui évite leur coincement,
- étant précisé que pour fixer la profondeur d'introduction de l'appareil de mesure de masse d'air (1) dans le conduit d'écoulement, le téton (20) vient s'appliquer contre le fond et limite ainsi ladite profondeur d'introduction.

2. Dispositif selon la revendication 1,
**caractérisé en ce que** les tiges de centrage (17) sont rapportées d'une seule pièce sur le bord extérieur du collet (12).

3. Dispositif selon la revendication 1,
**caractérisé en ce que** les ouvertures de centrage (7) sont conçues comme des rainures qui partent du bord extérieur de la surface d'application (4).

4. Dispositif selon l'une des revendications 1 à 3,
**caractérisé en ce que** les tiges de centrage (17) présentent à leur extrémité avant un cône d'introduction (22).

5. Dispositif selon la revendication 1 ou 2,
**caractérisé en ce que** l'ouverture de logement (15) ou le collet (12) présentent une extension oblongue et les tiges de centrage (17) se trouvent au moins approximativement au milieu de l'extension longitudinale.

6. Dispositif selon la revendication 1 ou 2,
**caractérisé en ce que** l'ouverture de logement (15) ou le collet (12) présentent une extension oblongue et les tiges de centrage (17) sont nettement espacées d'un axe longitudinal (10), étant précisé que l'axe longitudinal (10) forme le centre de l'extension longitudinale.
